# EUROPÄISCHE PATENTSCHRIFT

(11) **EP 0 468 169 B1**
(45) Veröffentlichungstag und Bekanntmachung des Hinweises auf die Patenterteilung: **09.08.1995**
(21) Anmeldenummer: 91109078.5
(22) Anmeldetag: 04.06.1991
(51) Int. Cl.: G05B 19/42

(54) **Verfahren und Vorrichtung zum Bestimmen der zu speichernden Daten zur Steuerung eines Roboters, insbesondere für die Schuhfertigung**
Method and device for determining data to be stored for the control of a robot, especially for shoe manufacturing
Méthode et appareil pour évaluer les données mémorisées pour commander un robot en particulier pour la fabrication de chaussures

(30) Priorität: 27.07.1990 DE 4023896; 12.01.1991 DE 4100806
(43) Veröffentlichungstag der Anmeldung: 29.01.1992
(73) Patentinhaber: Klöckner Desma GmbH, 47057 Duisburg (DE)
(72) Erfinder: Köster, Claus-Dieter, Dipl.-Ing., W-2807 Achim-Baden (DE); Lühr, Joachim, Dipl.-Ing., W-2811 Schwarme (DE)
(74) Vertreter: Röther, Peter, Dipl.-Phys.

(56) Entgegenhaltungen:
- EP-A- 0 145 957
- DE-A- 3 613 096
- PATENT ABSTRACTS OF JAPAN vol. 6, no. 141 (P-131)(1019) 30 Juli 1982, & JP-A-57 61905 (MATSUSHITA DENKO K.K.) 14 April 1982,

## Beschreibung

Die Erfindung betrifft ein Verfahren zum Bestimmen von zu speichernden Daten zur Steuerung eines Roboters, insbesondere für die Schuhfertigung, der mittels eines am Roboterarm angeordneten Werkzeuges insbesondere aufgeleistete Schuhschäfte bearbeitet, wobei zunächst anstelle des Werkzeuges eines Einrichtung zum optischen Abtasten des zu bearbeitenden Werkstücks angeordnet wird.

Die Erfindung betrifft nicht nur das Gebiet der Schuhfertigung, sie ist auch auf allen technischen Gebieten einsetzbar, auf denen das berührungslose Abtasten vorteilhaft ist und auf denen mit den ermittelten Daten eine Vorrichtung gesteuert wird, deren Abstand zu einem zu bearbeitenden Werkstück konstant zu halten ist, wie zum Beispiel bei Brenn-, Wasserstrahl- und Laserschneideinrichtungen, das Stanzen und Nippeln von Blechen nach Konturvorgabe usw.

Unter Schuhfertigung ist im Rahmen der Erfindung das Anformen von Schuhsohlen an Schuhschäfte, sowie das Kleben von vorgefertigten Schuhsohlen an Schuhschäfte zu verstehen.

Es kommt hierbei vor allem auf ein sorgfältiges Aufrauhen bzw. Aufsprühen des Klebers entlang der Linie der Dichtkante an, damit eine einwandfreie Verbindung zwischen Sohlenmaterial und Schuhschaft geleistet ist. Ein Aufrauhen bzw. Besprühen mit Kleber der Zone unterhalb dieser Linie in Richtung zur Brandsohle bzw. Bodenfläche des Schaftes ist ebenfalls erforderlich und wichtig, jedoch kann von der extremen Sorgfalt, wie beim Aufrauhen bzw. Aufsprühen von Kleber entlang der Linie der Dichtkante, abgesehen werden.

Es ist bereits bekannt (DE-AS 38 15 013), die zu speichernden Daten für die Steuerung eines Fräsers zum Aufrauhen bzw. eines Sprühkopfes mit Sprühdüse zum Auftragen von Klebstoff entlang der Linie der Dichtkante in der Weise zu gewinnen, daß das am Roboterarm montierte Werkzeug entlang dieser Linie unter gleichzeitigem Materialabtrag bzw. Kleberauftrag geführt wird. Eine Korrektur fehlerhaft gewordener Daten ist hierbei nicht möglich, insbesondere muß der zur Gewinnung der Speicherdaten verwendete Schuhschaft aussortiert werden, falls der Fräser unter zu hohem Arbeitsdruck Material bis auf den Leisten abträgt. Im allgemeinen muß beim Korrigieren der Daten die Bestimmung mit einem anderen Schuhschaft vorgenommen werden.

Es sind Verfahren zum Bestimmen von Koordinatenwerten zum Steuern von Industrie-Robotern bekannt. So ist in der DE-AS 36 13 096 das Bearbeiten von Werkstücken mit einem programmierten Mehrachsenroboter bekannt. Dieser führt ein Bearbeitungswerkzeug vorzugsweise einen Laserstrahl entlang einer dreidimensionalen Werkstückkontur, wobei auf ein Muster oder Werkstück eine Markierung, Schnittlinie oder dgl. aufgegegeben wird, um die zu bearbeitende Position zu markieren. Weiterhin wird zur Bestimmung der Koordinatenwerte vom Roboterarm anstelle des Bearbeitungswerkzeugs ein Sensor geführt, der die Achsen des Roboters so regelt, daß der Sensor stets den Markierungen folgt und an vorgegebenen Punkten die Koordinaten des Sensors in die NC-Steuerung als Programmpunkte eingegeben werden und sodann die Werkstücke auf der Basis dieses NC-Programms bearbeitet werden. Zum Abtasten der Markierungen wird ein TV-Kamera-Sensor verwendet, der die Werkzeugnormale und/oder die Werkzeughöhe zur Werkstückoberfläche ermittelt, so daß zumindest an den vorgegebenen Punkten der TV-Kamera-Sensor normal und/oder im Werkzeugsollabstand (senkrecht) zur Werkstückoberfläche orientiert ist.

Hierzu ist am TV-Kamera-Sensor in einem festen Winkel eine Lichtquelle angebracht, die einen möglichst kleinen punktförmigen Lichtpunkt auf dem Werkstück erzeugt. Der Werkzeugsollabstand ist dann erreicht, wenn der Lichtpunkt und das Zentrum eines Fadenkreuzes des TV-Kamera-Sensors auf der Markierung zusammentreffen. Zur Messung des Neigungswinkels des Werkzeuges sind drei Lichtstrahlen vorgesehen.

Im Prinzip könnte dieses Verfahren zum Steuern der Fräser eingesetzt werden, es ist jedoch für die Zwecke zu teuer und unwirtschaftlich.

Der Erfindung liegt deshalb die Aufgabe zugrunde, das Verfahren der eingangs erwähnten Art derart zu führen, daß die Bestimmung der Koordinatenwerte einfacher und damit wirtschaftlicher ist.

Diese Aufgabe wird erfindungsgemäß dadurch gelöst, daß die Einrichtung zum optischen Abtasten zwei sich schneidende Lichtstrahlen aussendet, wobei der Schnittpunkt der beiden Lichtstrahlen mit der späteren Bearbeitungsstelle übereinstimmt und entlang einer Arbeitslinie des Werkzeugs geführt wird, wobei jeweils die Koordinatenwerte des Schnittpunktes erfaßt und als Daten gespeichert werden und der Schnittpunkt so geführt wird, daß seine Querschnittsfläche im wesentlichen konstant bleibt.

Dadurch, daß der Schnittpunkt der Lichtstrahlen mit der Bearbeitungsstelle des Werkzeuges übereinstimmt, ist es ohne weiteres möglich, für ein Werkzeug mit anderen Abmessungen und damit anderem Abstand der Bearbeitungsstelle zum Roboterarm durch entsprechendes Verschwenken der Lichtstrahlen die Schnittnaht an die neue Bearbeitungsstelle zu verlegen.

Erfindungsgemäß wird der Schnittpunkt somit so geführt, daß seine Querschnittsfläche im wesentlichen konstant ist. Durch diese Maßnahmen wird erreicht, daß auch anschließend die Eindringtiefe des Fräsers beim Materialabtragen eine vorgegebene Tiefe nicht über- und auch nicht unterschreitet.

Im einfachsten Fall wird die Konstanz der Querschnittsfläche visuell durch das Bedienungspersonal geprüft.

In einer weiteren Ausgestaltung der Erfindung wird die Konstanz der Querschnittsfläche mit einer Videokamera geprüft. Dies kann beispielsweise in der Weise erfolgen, daß das aufgenommene Bild der Querschnittsfläche auf einem Display mit Millimeterrasterung abgebildet wird, so daß ohne weiteres eine Vergrößerung bzw. Verkleinerung der Querschnittsfläche durch eine entsprechende größere Anzahl bzw. kleinere Anzahl der ausgeleuchteten Elementarquadrate visuell erkennbar ist. Entsprechend kann auch das Bild der Querschnittsfläche dunkel auf hellem Hintergrund abgebildet werden. Anstelle der visuellen Beobachtung kann der Vergleich auch elektronisch erfolgen.

Gemäß einer weiteren Ausgestaltung dieser erfindungsgemäßen Überprüfung der Querschnittsfläche mit einer Videokamera werden die mit der Videokamera aufgenommenen Bilder der Querschnittsfläche mit dem gespeicherten Bild einer Querschnittsfläche verglichen, wobei bei einer Abweichung der beiden Bilder um einen vorgegebenen Betrag der Schnittpunkt der beiden Lichtstrahlen senkrecht zum momentanen Auftreffpunkt durch eine Bewegung des Roboterarms verschoben wird. Durch diese Maßnahmen ist es möglich, vollautomatisch die Konstanz der Querschnittsfläche zu überwachen, wobei nur noch manuell die Querschnittsfläche entlang der Arbeitslinie geführt wird.

Eine Vorrichtung zum Durchführen des Verfahrens ist in Anspruch 5 gekennzeichnet, und zwar dadurch, daß die Einrichtung zur optischen Abtastung zwei jeweils einen Lichtstrahl aussendende Strahlenquellen aufweist, wobei die beiden Strahlenquellen in der Einrichtung zueinander verschiebbar und zueinander verschwenkbar angeordnet sind, sowie Mittel zum Beobachten der Konstanz der Werkschnittsfläche des Schnittpunktes der von den Strahlenquellen ausgesendeten Lichtstrahlen.

Durch die Verschiebung kann der gegenseitige Abstand der beiden Strahlenquellen geändert werden. Weiterhin ist durch die zueinander verschwenkbare Anordnung der beiden Strahlenquellen die Verlegung der Querschnittsfläche der beiden Lichtquellen an die Bearbeitungsstelle der später in den Roboterarm einzusetzenden Bearbeitungseinrichtungen bzw. Werkzeuge ohne weiteres möglich.

Gemäß einem bevorzugten Ausführungsbeispiel sind die beiden Strahlenquellen jeweils in einer Verschwenkeinrichtung angeordnet und beide Verschwenkeinrichtungen derart miteinander verschwenkbar, daß der Schnittpunkt der beiden Lichtstrahlen und die Schnittpunkte der Schwenkachsen der Schwenkeinrichtungen mit der sie verbindenden Geraden ein gleichschenkliges Dreieck bilden. Durch diese Maßnahmen ist eine sehr einfache Anpassung an die arbeitsunterschiedlichen Bearbeitungsstellen der unterschiedlichen Werkzeuge möglich.

Die Erfindung wird in der Zeichnung anhand von Ausführungsbeispielen erläutert. Es zeigen:
- Fig. 1: eine Ansicht eines Roboterarms mit der schematisch dargestellten Vorrichtung sowie einen aufgeleisteten Schuhschaft und
- Fig. 2: das Ausführungsbeispiel der mit dem Roboterarm lösbar verbundenen Einrichtung.

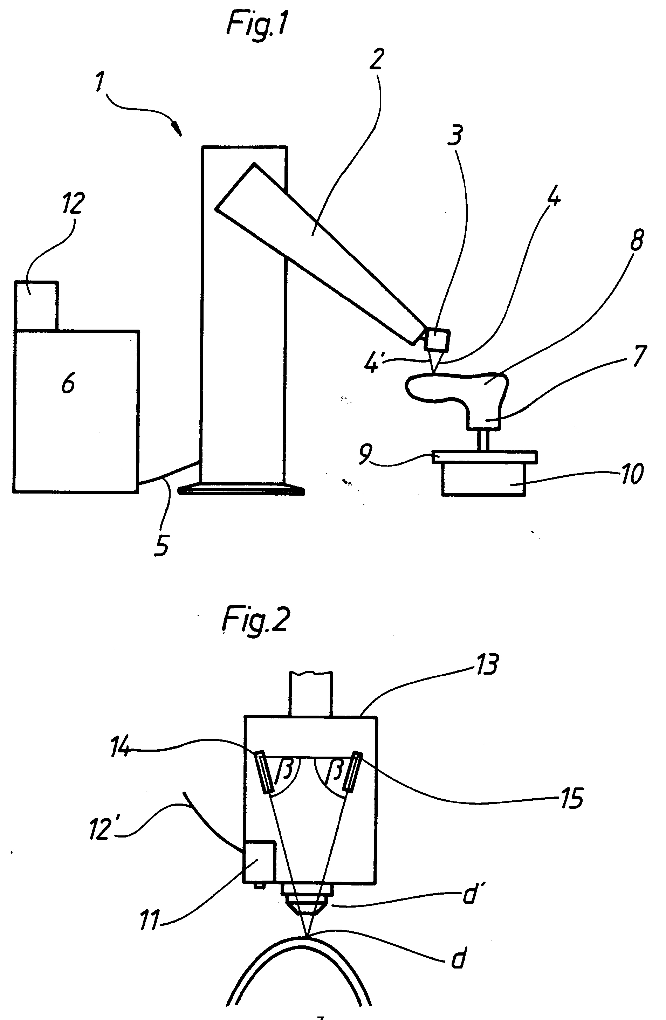

In Figur 1 ist schematisch eine Ansicht der gesamten Vorrichtung dargestellt. Mit 1 ist der Roboter bezeichnet, dessen Arm 2 am vorderen freien Ende die erfindungsgemäße Einrichtung zum Erzeugen der Querschnittsfläche der beiden sich schneidenden Strahlen, die mit 4 bzw. 4′ bezeichnet sind.

Vom Roboter führt in an sich bekannter Weise ein Steuerkabel 5 zu dem Steuerschrank 6, der eine an sich bekannte Steuerung mit Arbeitsspeicher usw. aufweist, die an sich bekannt sind.

Das Aufnehmen der zu speichernden Daten erfolgt mit dem an sich bekannten Teach-in-Verfahren, das allgemein bekannt und somit keiner weiteren Erklärungen bedarf.

Anstelle des bisher üblichen Fräsers weist zum Erfassen der zu speichernden Daten der Roboterarm 2 diese Einrichtung 3 auf. Sie wird von einem nicht dargestellten Bedienungsmann mittels einer ebenfalls nicht dargestellten manuellen Steuerung für den Roboter und den Roboterarm so gesteuert, daß der Schnittpunkt der beiden Lichtstrahlen entlang der Linie der Dichtkante auf dem Schuhschaft "wandert", d.h., daß der Schnittpunkt (Lichtfleck) mit konstantem Querschnitt entlang dieser Arbeitslinie geführt wird.

Wesentlich ist hierbei, daß wie in den bisher bekannten Fällen der vollautomatischen Bearbeitung bzw. Schuhherstellung die auf einem Leisten 7 aufgeleisteten Schuhschäfte 8 auf Transportpaletten mit einem schematisch angedeuteten Fördersystem 10 in eine stets definierte und gleich Position zum Roboter gebracht werden können, damit eine eindeutige Zuordnung der aufzunehmenden und zu speichernden Daten in Bezug auf die Arbeitslinie sichergestellt ist, und zwar während des Entlangführens des Lichtfleckes bzw. der Schnittstelle der beiden sich kreuzenden Lichtstrahlen 4 und 4′.

Weiterhin kann gemäß Figur 2 der Roboter noch zusätzlich eine Videokamera 11 aufweisen, die gemäß Fig. 2 in die Einrichtung 3 integriert ist und von der eine Signalleitung 12′ zu einer elektronischen Baugruppe 12 führt, die einerseits einen Speicher zum Speichern eines Lichtfleckes mit vorgegebenen Querschnitt, zum weiteren einen Speicher zur laufenden Speicherung des von der Videokamera aufgenommenen Lichtfleckes während des Entlangführens auf der Arbeitslinie aufweist, wobei dann weiterhin noch eine Vergleichseinrichtung vorgesehen ist, die die aufgenommenen Bilder mit dem Speicherbild vergleicht. Diese Maßnahmen sind ebenfalls an sich bekannt, und deshalb des Näheren nicht erläutert.

Sobald der Lichtfleck zu groß bzw. bezüglich seiner Querschnittsfläche zu klein wird, erfolgt durch entsprechende Steuerbefehle eine Verschwenkung des Roboterarms derart, daß die Querschnittsfläche die vorgegebene Größe (Sollwert) wieder erreicht.

Figur 2 zeigt schematisch die Einrichtung 3 mit den beiden Lichtstrahlen. Sie weist ein Gehäuse 13 auf, in dem auf einer Schiene (optischen Bank) die beiden Lichtstrahler 14 und 15 verschwenkbar zueinander verschoben werden können, und zwar derart, daß beim Verschwenken des einen Lichtstrahlers der andere Lichtstrahler automatisch so verschwenkt wird, daß die beiden von der Schiene und den Lichtstrahlen eingeschlossenen Winkeln, die mit β bezeichnet sind, stets gleich groß sind. Durch diese Maßnahmen wird erreicht, daß sich stets ein gleichschenkliges Dreieck gebildet ist, dessen Spitze auf der Mittelsenkrechten dieser optischen Bank verläuft, so daß sich durch einfache geometrische Beziehungen entsprechende Korrekturen der zu speichernden Daten über eine Rechenschaltung durchführen lassen, wenn beispielsweise die Arbeitsfläche eines anderen Werkzeuges die Stellung d′ statt d einnimmt, wobei selbstverständlich auch der Abstand des zu bearbeitenden Schuhschaftes von der Einrichtung sich ändert.

## Patentansprüche

1. Verfahren zum Bestimmen von zu speichernden Daten zur Steuerung eines Roboters (1), insbesondere für die Schuhfertigung, der mittels eines am Roboterarm (2) angeordneten Werkzeuges insbesondere aufgeleistete Schuhschäfte bearbeitet, wobei zunächst anstelle des Werkzeugs eine Einrichtung (3) zum optischen Abtasten des zu bearbeitenden Werkstücks (8) angeordnet wird,
dadurch gekennzeichnet,
daß die Einrichtung zur optischen Abtastung zwei sich schneidende Lichtstrahlen (4,4′) aussendet, wobei der Schnittpunkt der beiden Lichtstrahlen mit der späteren Bearbeitungsstelle übereinsimmt und entlang einer Arbeitslinie des Werkzeugs geführt wird, wobei jeweils die Koordinantenwerte des Schnittpunktes erfaßt und als Daten gespeichert werden und der Schnittpunkt so geführt wird, daß seine Querschnittsfläche im wesentlichen konstant bleibt.

2. Verfahren nach Anspruch 1,
dadurch gekennzeichnet,
daß die Konstanz der Querschnittsfläche visuell geprüft wird.

3. Verfahren nach Anspruch 1,
dadurch gekennzeichnet,
daß die Konstanz der Querschnittsfläche mit einer Videokamera (11) geprüft wird.

4. Verfahren nach Anspruch 3,
dadurch gekennzeichnet,
daß die mit der Videokamera (11) aufgenommenen Bilder der Querschnittsfläche mit dem gespeicherten Bild einer Querschnittsfläche verglichen werden und bei einer Abweichung der beiden Bilder um einen vorgegebenen Betrag, der Schnittpunkt der beiden Lichtstrahlen (4, 4′) senkrecht zum momentanen Auftreffpunkt durch eine Bewegung des Roboterarms verschoben wird.

5. Vorrichtung zum Bestimmen von zu speichernden Daten zur Steuerung eines Roboters (1), insbesondere für die Schuhfertigung, mit einer an einem Roboterarm (2) des Roboters angeordneten Einrichtung (3) zum optischen Abtasten des zu bearbeitenden Werkstücks (8),
dadurch gekennzeichnet,
daß die Einrichtung zur optischen Abtastung zwei jeweils einen Lichtstrahl aussendende Strahlenquellen (14,15) aufweist, wobei die beiden Strahlenquellen in der Einrichtung zueinander verschiebbar und zueinander verschwenkbar angeordnet sind, sowie Mittel (11) zum Beobachten der Konstanz der Werkschnittsfläche des Schnittpunktes der von den Strahlenquellen ausgesendeten Lichtstrahlen.

6. Vorrichtung nach Anspruch 5,
dadurch gekennzeichnet,
daß die beiden Strahlenquellen (14,15) jeweils in einer Verschwenkeinrichtung angeordnet sind und beide Verschwenkeinrichtungen derart miteinander verschwenkbar sind, daß der Schnittpunkt der beiden Lichtstrahlen und die Schnittpunkte der Schwenkachsen der Schwenkeinrichtungen mit der sie verbindenden Geraden ein gleichschenkliges Dreieck bilden.

## Claims

1. Process for the determination of data to be stored for the control of a robot (1) mainly used in shoemaking, in particular for working on shoe legs mounted on the blocks, by means of a tool fixed on the robot arm (2), a device (3) for optical scanning of the workpiece (8) first being mounted on the robot arm in the place of the tool,
characterised in
that the device for optical scanning emits two intersecting light beams (4, 4′), the point of intersection of the two light beams being coincident with the point subsequently to be worked on, and being moved along the working line of the tool, the point of intersection coordinates being determined and recorded and the point of intersection being so guided that its cross sectional area remains virtually constant.

2. Process according to claim 1,
characterised by
visual checking that the cross sectional area remains constant.

3. Process according to claim 1,
characterised in
that a video camera (11) is used for checking that the cross sectional area remains constant.

4. Process according to claim 3,
characterised in
that the pictures of the cross sectional area taken with the video camera (11) are compared with the stored image of a cross sectional area and that if the two images differ from one another by a given amount the point of intersection of the two ligth beams (4, 4′) is shifted normal to the momentary point of incidence by shifting the robot arm.

5. Apparatus for the determination of data to be stored for the control of a robot (1) mainly used in shoemaking, by means of a device (3), mounted on an arm (2) of the robot, for optical scanning of the workpiece (8),
characterised in
that the optical scanning device has two sources of radiation (14, 15) which each emit a light beam, the two ligth emitting sources being shiftable against and swivelling towards one another inside the device, and that it has means (11) to observe whether the cross sectional area of the point of intersection of the light beams emitted by the sources of radiation remains constant.

6. Device according to claim 5,
characterised in
that each of the two sources of radiation (14, 15) is arranged in a swivelling device and that the two swivelling devices can be swivelled simultaneously in such a way that an isosceles triangle is formed by the point of intersection of the two light beams and the points of intersection of the swivelling axes of the swivelling devices with the straight line connecting these axes.

## Revendications

1. Procédé pour la détermination de données à mettre en mémoire pour le contrôle d'un robot (1), destiné principalement à la fabrication de chaussures, pour travailler plus particulièrement les tiges montées sur forme moyennant un outil fixé sur le bras du robot (2), un dispositif optique (3) étant d'abord mis à la place de l'outil pour explorer par voie optique la pièce à travailler (8),
caractérisé en ce que
le dispositif d'exploration optique émet deux faisceaux lumineux (4, 4′) qui s'entrecroisent et dont le point d'intersection, mis en coïncidence avec le point de travail sur la pièce à travailler, est guidé le long de la ligne de travail de l'outil, les coordonnées du point d'intersection étant enregistrées et mises en mémoire et ledit point d'intersection étant guidé d'une telle manière que sa superficie demeure essentiellement constante.

2. Procédé suivant la revendication 1,
caractérisé en ce que
le maintien à une valeur constante de la superficie de section est contrôlé par vérification visuelle.

3. Procédé suivant la revendication 1,
caractérisé en ce que
le maintien à une valeur constante de la superficie de section est contrôlé à l'aide d'une caméra vidéo (11).

4. Procédé suivant la revendication 3,
caractérisé en ce que
les images de la superficie de section prises par la caméra vidéo (11) sont comparées avec l'image mise en mémoire d'une superficie de section et que, lorsque les deux images sont divergentes entre elles d'un montant préalablement donné, le point d'intersection des deux faisceaux lumineux (4, 4′) est déplacé perpendiculairement sur le point d'incidence de ce moment en déplaçant le bras du robot.

5. Dispositif pour la détermination de données à mettre en mémoire pour le contrôle d'un robot (1), destiné plus particulièrement à la fabrication de chaussures, moyennant un appareil d'exploration optique (3) disposé à un bras (2) du robot, pour l'exploration optique de la pièce à travailler (8),
caractérisé en ce que
l'appareil d'exploration optique dispose de deux sources de rayonnement (14, 15) émettant chacune un faisceau lumineux, les deux sources étant déplaçables et orientables simultanément l'une par rapport à l'autre au sein dudit appareil, ainsi que de moyens d'observation (11) pour assurer que la superficie du point d'intersection des faisceaux lumineux émis par les sources de rayonnement sur la pièce à travailler demeure constante.

6. Dispositif suivant la revendication 5,
caractérisé en ce que
chacune des deux sources de rayonnement (14, 15) est logée dans un appareil orientable et que les deux appareils orientables peuvent être orientés l'un contre l'autre de telle manière que le point d'intersection des deux faisceaux lumineux et les points d'intersection des axes d'orientation des appareils orientables, avec la droite qui les relie, forment un triangle isocèle.
